# EUROPEAN PATENT APPLICATION

(11) **EP 2 608 595 A1**
(43) Date of publication of application: **26.06.2013**
(21) Application number: 11817707.0
(22) Date of filing: 19.05.2011
(51) Int. Cl.: H04W 24/04, H04W 88/02

(54) **MOBILE TERMINAL AND FAILURE RECOVERY METHOD THEREOF**

(30) Priority: 19.08.2010 CN 201010260811
(71) Applicant: Huawei Device Co., Ltd., Shenzhen, Guangdong 518129 (CN)
(72) Inventor: CHEN, Lei, Shenzhen Guangdong 518129 (CN)
(74) Representative: Isarpatent
(86) International application number: PCT/CN2011/074285
(87) International publication number: WO 2012/022180

(57) **Abstract**

A mobile terminal and failure recovery method thereof, wherein the method comprises: a wireless MODEM receives failure recovery triggering information, in the case that an AP can not work normally; the MODEM acquires control to peripherals of the mobile terminal; the MODEM sends failure information to the network side; the MODEM receives failure recovery information returned from the network side, in order for the mobile terminal to recover the failure according to the failure recovery information. The method and mobile terminal in the embodiments of the present invention are simple and can avoid the loss of user data.

## Description

The present application claims the priority of Chinese Patent Application NO. 201010260811.7, filed in Chinese Patent Office on August 19, 2010, and entitled "Mobile Terminal and Failure Recovery Method thereof", the entire contents of which are incorporated herein by reference.

### Field of Invention

The present invention relates to communication technologies, and particularly, to a mobile terminal and failure recovery method thereof.

### Background of the Invention

At present, the architecture of "application processor + wireless modem", namely, the architecture of "AP+MODEM", is used in more and more high-end smart mobile phones, wherein the AP means application processor (Application Processor, AP for short) and the MODEM means wireless modem built in a mobile terminal.

Under such architecture, functions of the AP and that of the MODEM are independent from each other, and the AP and the MODEM communicate with each other by means of serial ports or shared memory. With regard to different wireless protocols, such as Wideband Code Division Multiple Access (Wideband Code Division Multiple Access , WCDMA for short), Code Division Multiple Access (Code Division Multiple Access, CDMA for short), Time Division-Synchronous Code Division Multiple Access (Time Division-Synchronous Code Division Multiple Access, TD-SCDMA for short), etc, mobile phone manufacturers may use a uniform AP, and correspondingly use different MODEMs, which are applicable to different wireless protocols respectively.

Generally, high-end smart mobile phones are constructed based on open platform, and may be provided with a plenty of third party applications for users to use. However, this open platform also brings the possibility of invading to the mobile phones by virus and malicious programs, resulting in that the mobile phones can not be started or used normally.

If a mobile phone can not be started or used normally, the user usually turns to a mobile phone maintenance point or the mobile phone manufacture to repair the mobile phone, or forcefully upgrades the mobile phone or recovers settings of the mobile phone to the factory settings, according to a user manual provided by the mobile phone manufacture, by which all user data will be erased.

It can be seen that the failure recovery method of the mobile phone in the prior art involves a complicated failure recovery process if the mobile phone is repaired by the mobile phone maintenance point or the mobile phone manufacture, otherwise will cause loss of user data if the mobile phone is recovered to the factory settings.

Not only the mobile phones, but also other mobile terminals in which the architecture of "AP+MODEM" is adopted have the similar problems.

### Summary of the Invention

A mobile terminal and failure recovery method thereof is provided in the embodiments of the present invention, which may be used to solve the problems of complication in failure recovery process and easy loss of user data when the mobile terminal encounters a failure.

The embodiments of the present invention provide a failure recovery method of mobile terminal applicable to a mobile terminal which comprises an application processor and a wireless modem, comprising:
the wireless modem receives failure recovery triggering information, in the case that the application processor can not work normally;
the wireless modem acquires control to peripherals of the mobile terminal;
the wireless modem sends failure information to the network side;
the wireless modem receives failure recovery information returned from the network side, in order for the mobile terminal to recover the failure according to the failure recovery information.

The embodiments of the present invention further provide a mobile terminal comprising an application processor and a wireless modem, wherein the application processor is configured to process application programs, and the wireless modem comprises:
a first receiving module for receiving failure recovery triggering information in the case that the application processor can not work normally;
a peripheral control module for acquiring control to peripherals of the mobile terminal after the first receiving module receives the failure recovery triggering information;
a first sending module for sending failure information to the network side;
a second receiving module for receiving failure recovery information returned from the network side.

In the mobile terminal and failure recovery method thereof in the embodiments of the present invention, upon receiving failure recovery triggering information, the MODEM takes over control to peripherals and sends failure information to the network side and receives failure recovery information, in order for the mobile terminal to recover the failure according to the failure recovery information. With this failure recovery method, the user may acquire the failure recovery information through interaction between the mobile terminal and the network side. The failure recovery method is easy and the user do not need to turn to a maintenance point or the manufacture to repair the mobile terminal, thus avoiding a complicated process; since the network side may provide failure recovery information, it makes the mobile terminal may recover the failure according to the failure recovery information and needs not to be recovered to the factory settings, thus avoiding the loss of user data.

### Brief Description of the Drawings

To illustrate the technical solutions in the embodiments of the present invention or in the prior art more clearly, a brief introduction to the accompanying drawings which are needed in the description of the embodiments or the prior art is given below. Apparently, the accompanying drawings described below are some embodiments of the present invention, based on which other drawings can be obtained by the persons of ordinary skills in the art without any inventive efforts.
Fig. 1 is a schematic flowchart showing an embodiment of the failure recovery method for a mobile terminal according to the present invention;
Fig.2 is a structural diagram showing a mobile terminal embodiment according to the present invention.

### Embodiments of the Invention

In order to better understand the objectives, solutions and advantages of the embodiments of the present invention, the technical solutions in the embodiments of the present invention will be described clearly and completely hereinafter with reference to the accompanying drawings in the embodiments of the present invention. Evidently, the described embodiments are merely part, but not all, of the embodiments of the present invention. All other embodiments, which can be derived by the persons of ordinary skills in the art based on the embodiments of the present invention without any inventive efforts, shall fall into the protection scope of the present invention.

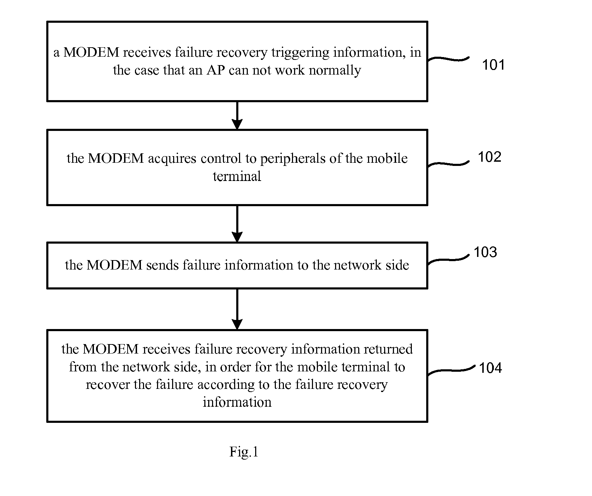

Fig.1 is a flowchart showing an embodiment of the failure recovery method for a mobile terminal according to the present invention, comprising:
Step 101, a MODEM receives failure recovery triggering information, in the case that an AP can not work normally.
Step 102, the MODEM acquires the control to peripherals of the mobile terminal.

In the step 102, once acquiring the control to the peripherals of the mobile terminal, the MODEM can shield the control of the AP to the peripherals.

Step 103, the MODEM sends failure information to the network side.

Step 104, the MODEM receives failure recovery information returned from the network side, in order for the mobile terminal to recover the failure according to the failure recovery information.

The operation principle of Embodiment 1 of the present invention will be described in detail below.

The mobile phone is taken as an example below. If a third party application program loaded by the user carries virus or malicious programs, it will result in that the AP can not work normally. While, as for the mobile phone of which the architecture is "AP +MODEM", the function of the AP and the function of the MODEM are independent from each other, so the MODEM may still work normally even if the AP can not work normally.

Based on such case, when the mobile phone can not be started normally when encountering a failure, the MODEM may be used to recover the failure. An approach may be pre-determined to send failure recovery triggering information to the MODEM, so that the MODEM may start failure recovery upon receiving the triggering information. For example, it may be pre-determined that one set of key combination is used to denote that the mobile phone encountered a failure, wherein the failure triggering information is such pre-set key combination information. Once the user presses such key combination and the MODEM receives such pre-set key combination information, the MODEM may start failure recovery. With regard to different mobile terminals, since the settings of keys are different, there may be different kinds of key combination. For example, "*" and "0" on the mobile phone may be combined into one kind of key combination.

A mobile phone may comprise a plurality of peripherals, such as display screen, keys, audio output channel, Subscriber Identity Module (Subscriber Identity Module, SIM for short), wherein both of AP and MODEM may control these peripherals independently. If the AP can not work normally, the MODEM needs to acquire the control to these peripherals, namely the MODEM needs to shield the control signal of the AP to the peripherals of the mobile terminal. Particularly, electrical level of a General Purpose Input/Output Port (General Purpose Input/Output Port, GPIO for short) pin may be set to a pre-set electrical level, wherein the pre-set electrical level may be a high electrical level or a low electrical level. It may be pre-set whether the electrical level of the GPIO pin set to a high electrical level denoting to shield the control signal of the AP to the peripherals, or the electrical level of the GPIO pin set to a low electrical level denoting to shield the control signal of the AP to the peripherals.

It is supposed that the GPIO pin of the MODEM set to the high electrical level denotes to shield the control signal of the AP to the peripherals. When the mobile phone can not be start normally as the AP can not work normally, the MODEM receives pre-set key combination information and sets the electrical level of the GPIO pin to the high electrical level. As such, the peripherals may not be controlled by the AP instead of controlled by the MODEM only.

After taking over the control to the peripherals, the MODEM initializes the SIM firstly, then controls the display screen to display a failure recovery interface, notices the user the steps needed to be performed, and sends failure information to the network side.

The network side means the network side of the operator. The network side of the operator may return failure recovery information according to the failure information sent by the MODEM, and then the MODEM recovers the failure of the mobile phone according the received failure recovery information.

The failure recovery mode from the operator may comprise the following two modes:

### (1) The failure recovery information is provided by the Staff Service Center at the network side of the operator.

The MODEM may send the failure information to the Staff Service Center at the network side of the operator. For example, the MODEM prompts the user to select by pressing keys via the failure recovery interface, and may access the Staff Service Center at the network side of the operator upon receiving the pre-determined key information for failure recovery calling, and thus sends the failure information by means of voice to the Staff Service Center at the network side of the operator. The service staff of the Staff Service Center of the operator may provide the failure recovery information for the user after inquiring the failure information. Particularly, the failure recovery information may be sent to the MODEM by means of voice, and the failure recovery information returned to the MODEM by means of voice. The user may choose corresponding keys according to the failure information and recover the failure of the mobile phone according to the key information.

### (2) The failure recovery information is provided by a server at the network side of the operator.

The MODEM can control the display screen to display a failure recovery interface, wherein the failure recovery interface may display several kinds of failure information determined by the MODEM for the user to select. The failure information may be stored in a memory or FLASH (FLASH) of the mobile phone by the AP after a failure occurred. When performing the failure recovery, the MODEM may acquire the failure information from the memory or the FLASH, and display the information to the user. The user selects one or several kinds of failure information by pressing the keys. Upon receiving the key information from the user, the MODEM sends the failure information selected by the user to the server at the network side of the operator. The server of the operator chooses, according to the failure information, the corresponding failure recovery information, and sends the failure recovery information to the MODEM. The failure recovery may be started according to the failure recovery information received by the MODEM.

Different failures correspond to different failure information hence different failure recovery information. For example, the failure occurred to the mobile phone may be that the mobile phone can not be started because of loss of the factory system files. In this case, the failure information may be loss of system files. Factory system files of various types of mobile phones may be stored in the server of the operator. Upon receiving the failure information sent by the MODEM, the server may find the system files corresponding to the mobile phone, and send the system files to the MODEM. In this case, the failure recovery information is the system files. Upon receiving the system files, the MODEM may load the system files to the AP, and thus the AP may work normally.

The failure information sent by the MODEM may further comprise the type, version of software, error log of the mobile phone and the like, and the server may retrieve the failure recovery information more quickly based on this failure information.

In order to avoid power-fail of the mobile phone during the process of the failure recovery, the MODEM may store the received failure recovery information in the FLASH. In every phase of failure recovery, the mobile terminal may write the marker information in the designated position of the FLASH. The marker information is used for indicating the phase of the mobile terminal as performing failure recovery. If the power of the mobile phone fails during failure recovery, the marker information may be read from the designated position (for example, the storage chip of the mobile phone) and it may be determined whether it need to enter the failure recovery mode again according to the phase of the failure recovery. If it needs to enter the failure recovery mode again, the memory may be loaded with the failure recovery information in the FLASH, and the failure recovery may continue. If it does not need to enter the failure recovery mode, the mobile phone may be started normally.

For example, the phases of the failure recovery may be pre-set. For example, with regard to one kind of failure A, the failure recovery corresponding to the failure A comprises four phases, wherein the fourth phase is a failure recovery finish phase, and the third phase is a data reconfiguration phase. If the power of the mobile phone fails in the third phase, the marker information may be read from the storage chip, then it may be determined that the mobile phone is in the third phase when the power of the mobile phone fails and the data reconfiguration has not been finished and the failure recovery needs to be restarted, thus the data reconfiguration may be started from the third phase. If the power of the mobile phone fails in the fourth phase, the marker information may be read from the storage chip, then it may be determined that the mobile phone is in the forth phase when the power of mobile phone fails and the failure recovery has already been finished, thus it does not need to enter the failure recovery mode.

Generally, a user may only recover the failure of his mobile phone. If the failure recovery information of the mobile phone of the user is obtained through the network of the operator by someone else, it will cause information leakage of the mobile phone user. In order to avoid the information leakage of the mobile phone user, the network side of the operator may perform authentication to the mobile phone sending the failure information. Particularly, a mobile phone is usually bound with one SIM card. Upon receiving the failure information, the server may check whether the International Mobile Subscriber Identity (International Mobile Subscriber Identity, IMSI for short) of the SIM card and International Mobile Equipment Identity (International Mobile Equipment Identity, IMEI for short) of the mobile phone match each other. If yes, the failure recovery information is returned to the MODEM of the mobile phone. Otherwise, the failure recovery information is not returned to the MODEM of the mobile phone.

The mobile phone has been taken as an example to describe the above embodiments. As for other mobile terminals in which the architecture of "AP+MODEM" is used, the process of failure recovery is similar with that of the mobile phone.

The failure recovery method of mobile terminal provided in the embodiments of the present invention, upon receiving failure recovery triggering information, shields the control information of the AP to the peripherals of the mobile terminal, namely to make the MODEM take over control to peripherals and sends failure information to the network side, and after receiving failure recovery information, recovers the failure of the mobile terminal according to the failure recovery information. With this failure recovery method, the user may acquire the failure recovery information through interaction with the network side, which makes it easy to effect. The user needs not to turn to a maintenance point or the manufacture to repair the mobile terminal, thus avoid the complicated process; since the network side may provide failure recovery information, it makes that the mobile terminal may perform failure recovery according to the failure recovery information and needs not to recover to the factory settings, thus avoiding the loss of user data.

In addition, in an embodiment of the present invention, upon receiving the failure recovery information, the mobile terminal stores the failure recovery information in a FLASH, and writes marker information in a designated position of the FLASH during failure recovery. Once the power of the mobile terminal fails, the mobile terminal may read the marker information from the designated position of the FLASH after restarting and continue the failure recovery, which avoids that the failure recovery of the mobile terminal can not be finished for power-fail of the mobile terminal.

In an embodiment of the present invention, the server at the network side of the operator may determine whether the SIM card and the mobile terminal match each other according to the IMSI of the SIM card and the IMEI of the mobile terminal. If yes, the failure recovery information is returned to the mobile terminal, otherwise the failure recovery information is not returned to the mobile terminal, which avoids the user information leakage when the failure recovery is performed after the mobile terminal of the user is obtained by someone else.

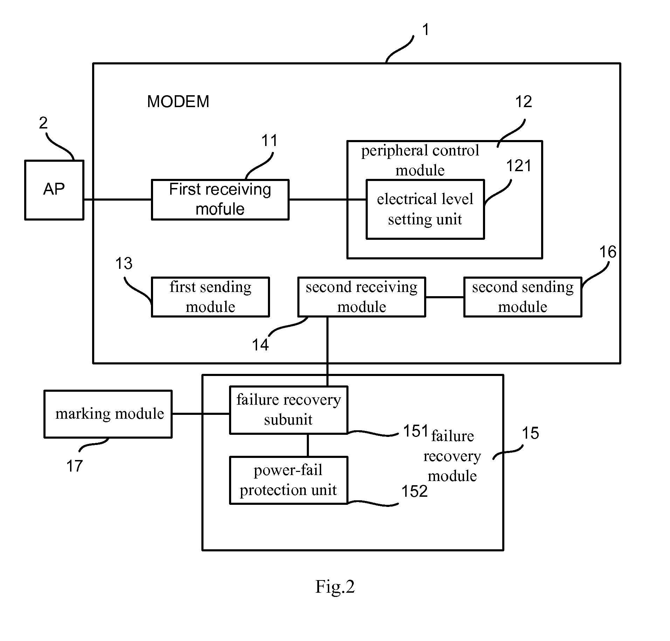

Fig.2 is a structural diagram showing an embodiment of the mobile terminal according to the present invention. The mobile terminal comprises an AP 2 and a MODEM 1, wherein the AP 2 is configure to process application programs, and the MODEM 1 comprises a first receiving module 11, a peripheral control module 12, a first sending module 13, and a second receiving module 14. The first receiving module 11 is configured to receive failure recovery triggering information in the case that the AP2 can not work normally. The peripheral control module 12 is connected with the first receiving module 11 and is configured to acquiring control to peripherals of the mobile terminal after the first receiving module 11 receives the failure recovery triggering information. The first sending module 13 is configured to send failure information to the network side. The second receiving module 14 is configured to receive failure recovery information returned by the network side.

Here, the first receiving module 11 may be configured to receive pre-set key combination information. The peripheral control module 12 may comprise an electrical level setting unit 121. The electrical level setting unit 121 is configured to set the electrical level of GIPO pin to a pre-set electrical level after the first receiving module 11 receives the pre-set key combination information, so as to acquire the control to the peripherals.

The above mobile terminal may further comprise a failure recovery module 15, wherein the failure recovery module 15 is connected with the second receiving module 14 and is configured to perform failure recovery according to the failure recovery information received by the second receiving module 14.

The MODEM 1 may further comprise a second sending module 16, and the mobile terminal may further comprise a marking module 17. The second sending module 16 is configured to send the failure recovery information received by the second receiving module 14 to a FLASH. The marking module 17 is configured to write maker information in the designated position of the FLASH during the process of the failure recovery module 15 performing the failure recovery.

Here, the failure recovery module 15 may comprise a failure recovery subunit 151 and power-fail protection unit 152. The failure recovery subunit 151 is configured to perform the failure recovery of the mobile terminal according to the failure recovery information received by the second receiving module 14. The power-fail protection unit 152 is configured to read the marker information from the designated position of the FLASH when the power of the mobile terminal fails and the mobile terminal is restarted. After the power-fail protection unit 152 reads the marker information, the failure recovery subunit 151 may determine the phase of the failure recovery to further determine whether the failure recovery needs to be continued.

As for the specific work process of each module of the mobile terminal in the embodiments of the present invention, please refer to the description of the above method embodiments.

In the mobile terminal in the embodiments of the present invention, the peripheral control module shields the control information of the AP to the peripherals of the mobile terminal after the first receiving module receives the failure recovery triggering information, namely that the MODEM takes over control to the peripherals and then the first sending module sends failure information to the network side and the second receiving module receives failure recovery information returned by the network side, thus the mobile terminal recovers the failure according to the failure recovery information. With this mobile terminal, the user may obtain the failure recovery information by interacting with the network side, which make the method easy to effect, and the user needs not to turn to a maintenance point or the manufacture to repair the mobile terminal, thus avoiding the complicated process; since the network side may provide failure recovery information, it makes the mobile phone may recovers the failure according to the failure recovery information and needs not to be recovered to the factory settings, thus avoiding the loss of user data.

The failure recovery method and mobile terminal may be applied to several following scenes:

### (1) The user forgets the startup password.

In this scene, the user presses the key combination, and the MODEM sets electrical level of GPIO pin to a high electrical level and sends failure information to the network side of the operator. The failure information may comprise the type of the mobile phone, failure content (namely seeking for acquiring the startup password of the user), etc. Upon receiving the failure information, the server determines whether the IMSI of the SIM card and the IMEI of the mobile terminal match each other. If yes, the server returns the startup password to the MODEM. Upon receiving the startup password, the MODEM writes the startup password into the AP. As such, the mobile phone may be started normally.

### (2) Cleaning of malicious program

The MODEM may regularly detect whether there exists suspicious programs in the AP. If a suspicious program is detected, the MODEM may send the suspicious program to the server of the network side of the operator. The server may be disposed with a suspicious program library. If it is detected that the suspicious program sent by the MODEM is one kind of suspicious program in the suspicious program library, a notice message may be sent to the MODEM to notice the MODEM that the suspicious program is a malicious program. Upon receiving the notice message, the MODEM may remove the suspicious program from the AP.

### (3) Recovery of system files

If some system files are lost or destroyed, the MODEM may send failure information to the server at the network side of the operator, so as to request the server to return the system files. Upon receiving the failure information, the server may send the system files to the MODEM, and the MODEM may write the received system files into the AP.

Those skilled in the art may understand that all of or part of the steps of the method specified in any of the embodiments above may be implemented by a program instructing relevant hardware. The program may be stored in a computer readable storage medium. The program executes the steps of above method embodiments when running. The storage medium may be a ROM, RAM, or a magnetic disk, or an optical disk and other medium which may store the program code.

It should be noticed that the foregoing is merely used for describing the solutions of the present invention, rather than restricting thereof. Although the present invention is described with reference to the above embodiments, the persons of ordinary skills in the art should understand that modifications to the solutions in above embodiments or substitutions to part of technical features therein are possible. Such modifications or substitutions will not make the nature of corresponding solutions depart from the scopes of the solutions of the embodiments of the present invention.

## Claims

1. A failure recovery method for a mobile terminal applicable to a mobile terminal which comprises an application processor and a wireless modem, **characterized in that**, the method comprises:
the wireless modem receives failure recovery triggering information, when the application processor can not work normally;
the wireless modem acquires control to peripherals of the mobile terminal;
the wireless modem sends failure information to the network side;
the wireless modem receives failure recovery information returned from the network side, in order for the mobile terminal to recover the failure according to the failure recovery information.

2. The method according to Claim 1, wherein the failure recovery triggering information comprises pre-set key combination information.

3. The method according to Claim 1, wherein the wireless modem acquires control to peripherals of the mobile terminal comprises:
the wireless modem sets the electrical lever of universal input/output pin to a pre-set electrical level.

4. The method according to any one of Claims 1-3, further comprising:
storing the failure recovery information in a FLASH, upon receiving the failure recovery information;
the mobile terminal writing marker information in a designated position of the FLASH, during the process of performing the failure recovery according to the failure recovery information, wherein the marker information is used for indicating the phase of the failure recovery.

5. The method according to Claim 4, further comprising:
if the power of the mobile terminal fails during the process of the mobile terminal performing the failure recovery according to the failure recovery information, reading the marker information from the designated position after being restarted, and determining whether the failure recovery process needs to be performed according to the phase of the failure recovery,
if yes, continuing to recover the failure.

6. A mobile terminal comprising an application processor and a wireless modem, wherein the application processor is configured to process application program, and the wireless modem comprises:
a first receiving module for receiving failure recovery triggering information in the case that the application processor can not work normally;
a peripheral control module for acquiring control to peripherals of the mobile terminal after the first module receives the failure recovery triggering information;
a first sending module for sending failure information to the network side;
a second receiving module for receiving failure recovery information returned from the network side.

7. The mobile terminal according to Claim 6, wherein the first receiving module is particularly configured to receive pre-set key combination information.

8. The mobile terminal according to Claim 7, wherein the peripheral control module comprises:
an electrical level setting unit configured to set the electrical lever of the universal input/output pin to a pre-set electrical level.

9. The mobile terminal according to any one of Claims 6-8, wherein the mobile terminal further comprises:
a failure recovery module configured to perform failure recovery according the failure recovery information.

10. The mobile terminal according to Claim 9, wherein the wireless modem further comprises a second sending module, and the mobile terminal further comprises a marking module;
the second sending module is configured to send the failure recovery information received by the second receiving module to a FLASH;
the marking module is configured to write marker information in a designated position of the FLASH during the process of the failure recovery module performing the failure recovery.

11. The mobile terminal according to Claim 10, wherein the failure recovery module comprises a failure recovery subunit and a power-fail protection unit;
the power-fail protection unit is configured to read the marker information from the designated position of the FLASH after the power of the mobile terminal fails and the mobile terminal is restarted;
the failure recovery subunit is configured to determine the phase of the failure recovery and further determining whether the failure recovery process needs to be continued.
